# EUROPÄISCHE PATENTSCHRIFT

(11) **EP 2 118 612 B1**
(45) Veröffentlichungstag und Bekanntmachung des Hinweises auf die Patenterteilung: **04.09.2013**
(21) Anmeldenummer: 08707008.2
(22) Anmeldetag: 11.01.2008
(51) Int. Cl.: F28F 21/08, F28F 13/12, F02B 29/04, F02M 25/07

(54) **ABGASWÄRMEÜBERTRAGER ODER LADELUFTKÜHLER**
EXHAUST GAS HEAT EXCHANGER OR INTERCOOLER
ÉCHANGEUR DE CHALEUR DE GAZ D'ECHAPPEMENT OU REFROIDISSEUR D'AIR DE SURALIMENTATION

(30) Priorität: 03.02.2007 DE 102007005389
(43) Veröffentlichungstag der Anmeldung: 18.11.2009
(73) Patentinhaber: Behr GmbH & Co. KG, 70469 Stuttgart (DE)
(72) Erfinder: PFITZER, Matthias, 73779 Deizisau (DE); ENGLERT, Peter, 74177 Bad Friedrichshall (DE); GORGES, Roger, 70193 Stuttgart (DE); GRÜNEWALD, Bernd, 72622 Nürtingen (DE); KNÖDLER, Wolfgang, 71332 Waiblingen (DE)
(74) Vertreter: Grauel, Andreas
(86) Internationale Anmeldenummer: PCT/EP2008/000196
(87) Internationale Veröffentlichungsnummer: WO 2008/095578

(56) Entgegenhaltungen:
- WO-A-2006/063759
- WO-A-2006/100072
- JP-A- 3 238 170
- US-A- 5 490 559
- US-A- 6 070 657

## Beschreibung

Die Erfindung betrifft einen Abgaswärmeübertrager oder einen Ladeluftkühler, mit mindestens einem aus einer Rohrlegierung gebildeten Rohr, das von einem Medium durchströmt wird und in dem eine aus einer Einlagenlegierung gebildete Turbulenzeinlage angeordnet ist.

Aus der deutschen Offenlegungsschrift DE 103 28 748 A1 ist ein Ladeluftkühler mit Rohren und zwischen den Rohren angeordneten Rippen bekannt. Das Rohr, ein mit dem Rohr verbundener Sammelkasten und/oder ein in dem Rohr angeordnetes Turbulenzblech sind/ist aus einem Stahlband hergestellt, auf welches eine Aluminiumschicht aufgebracht ist. Hartlötverbindungen aus Edelstahl und Aluminium sind aufgrund von Sprödphasenbildung zwischen Eisen und Aluminium schwierig herzustellen und erfordern spezielle Bedingungen, Des Weiteren sind aus den japanischen Patentzusammenfassungen JP 03238170 A und JP 02063681 A Verfahren bekannt, bei denen Edelstahl über ein Schichtsystem aus Titan und Aluminium-Silizium-Lot miteinander durch Vakuumlöten oder Löten in einer Schutzgasatmosphäre verbunden werden kann. Der Titanfilm wird dabei mittels PVD (Physical Vapour Deposition) aufgebracht.

Aufgabe der Erfindung ist es, einen Wärmeübertrager gemäß dem Oberbegriff des Anspruchs 1 zu schaffen, der eine hohe Lebensdauer aufweist und einfach herzustellen ist.

Die Aufgabe ist bei einem Abgaswärmeübertrager oder einen Ladeluftkühler, mit mindestens einem aus einer Rohrlegierung gebildeten Rohr, das von einem Medium durchströmt wird und in dem eine aus einer Einlagenlegierung gebildete Turbulenzeinlage angeordnet ist, dadurch gelöst, dass die Rohrlegierung eine Leichtmetalllegierung, insbesondere Aluminium oder eine Aluminiumlegierung, und die Einlagenlegierung Stahl ist und dass das Rohr mit der Turbulenzeinlage verlötet ist, wobei die Einlagenlegierung mit Aluminium oder einer Aluminiumlegierung bedeckter Edelstahl ist und das Rohr aus einem plattierten Rohrwerkstoff gebildet ist.

Die Turbulenzeinlage ist im Betrieb des Wärmeübertragers korrosiv stark belastet. Gemäß einem wesentlichen Aspekt der vorliegenden Erfindung ist die in dem aus Aluminium oder aus einer Aluminiumlegierung, gebildeten Rohr angeordnete Turbulenzeinlage aus Stahl gebildet. Durch die Kombination eines Rohres aus Leichtmetall mit einer Turbulenzeinlage aus Stahl kann das Gewicht des Wärmeübertragers im Vergleich zu Wärmeübertragern, bei denen auch die Rohre aus Stahl gebildet sind, deutlich reduziert werden. Durch die Turbulenzeinlage aus Stahl wird die Festigkeit des zugehörigen Rohres, das aus einem weicheren Material als die Turbulenzeinlage gebildet ist, deutlich erhöht.

Die Turbulenzeinlage ist aus Edelstahl gebildet. Als Edelstahl werden rostfreie Stähle bezeichnet, die mit Stahlveredelungsmitteln, wie Chrom oder Mangan, legiert sind und nur einen geringen Gehalt an Phosphor, Schwefel und anderen unerwünschten Begleitelementen und Schlackeneinschlüssen aufweisen. Als Edelstahl werden im Rahmen der vorliegenden Erfindung alle Stähle bezeichnet, die aufgrund ihrer chemischen Zusammensetzung eine Oxidschicht bilden, die auch als Passivschicht bezeichnet wird. Vorzugsweise enthält der Edelstahl mindestens 12 Prozent Chrom.

Das Rohr ist aus einem plattierten Rohrwerkstoff gebildet. Vorteilhafterweise können zur Herstellung des Wärmeübertragers herkömmliche Rohre aus Leichtmetall mit Lotplattierung verwendet werden.

Die Turbulenzeinlage ist mit einer Schutzplattierung versehen.

Durch eine Vorbeschichtung der Turbulenzeinlage aus Edelstahl mit Leichtmetall wird es möglich, die Turbulenzeinlage insbesondere flussmittelfrei mit dem Rohr aus Leichtmetall zu verlöten.

Die Turbulenzeinlage ist mit Aluminium beschichtet. Das Aluminium kann in Reinform oder in Form einer Legierung vorliegen.

Ein bevorzugtes Ausführungsbeispiel des Wärmeübertragers ist dadurch gekennzeichnet, dass die Schutzplattierung 4 bis 15, insbesondere 5 bis 12, Prozent Silizium und/oder 0,05 bis 10, insbesondere 0,2 bis 5, Prozent Zink enthält. Diese Werte haben sich im Rahmen der vorliegenden Erfindung als besonders vorteilhaft erwiesen.

Ein weiteres bevorzugtes Ausführungsbeispiel des Wärmeübertragers ist dadurch gekennzeichnet, dass die Schutzplattierung bis zu 0,3 Prozent Indium, Zinn und/oder Vanadium enthält. Diese Werte haben sich im Rahmen der vorliegenden Erfindung als besonders vorteilhaft erwiesen.

Ein weiteres bevorzugtes Ausführungsbeispiel des Wärmeübertragers ist dadurch gekennzeichnet, dass die Dicke der Schutzplattierung 2 bis 30, insbesondere 5 bis 20, Prozent der Dicke der Turbulenzeinlage beträgt. Diese Werte haben sich im Rahmen der vorliegenden Erfindung als besonders vorteilhaft erwiesen.

Bei einem Lötverfahren zum Herstellen eines vorab beschriebenen Wärmeübertragers wird die Turbulenzeinlage vor dem Löten mit Leichtmetall, insbesondere mit Aluminium oder mit einer Aluminiumlegierung, beschichtet und anschließend mit dem Rohr aus Leichtmetall verlötet. Durch die Vorbeschichtung mit Leichtmetall wird es ermöglicht, auf einfache Art und Weise einen Wärmeübertrager mit stabilen und leichten Rohren unter Schutzgas oder im Vakuumlötverfahren insbesondere flussmittelfrei herzustellen.

Ein bevorzugtes Ausführungsbeispiel des Lötverfahrens ist dadurch gekennzeichnet, dass die Turbulenzeinlage und/oder das Rohr vor dem Löten mit einer weiteren Beschichtung versehen werden/wird. Die weitere Beschichtung enthält vorzugsweise Lot und/oder Flussmittel.

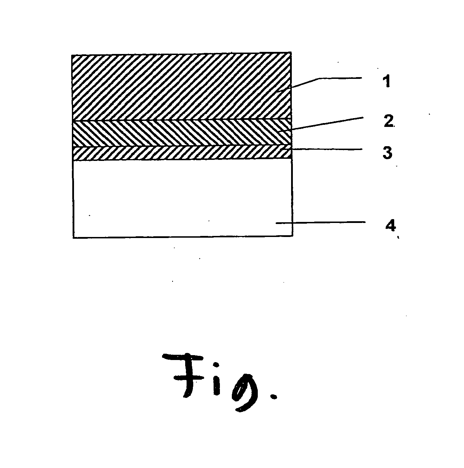

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind.

Die beiliegende Figur zeigt einen Schnitt durch einen Teil eines erfindungsgemäßen Wärmeübertragers.

Die vorliegende Erfindung betrifft vorzugsweise die Niederdruck-Abgasrückführung bei Dieselmotoren von Kraftfahrzeugen. In einem Niederdruck-Abgasrückführsystem wird ein Kraftstoff-Luftgemisch über einen Luftfilter von einem Verdichter angesaugt und dem Motor zugeführt. Das Abgas des Motors wird in einer Turbine entspannt, die den Verdichter antreibt. Stromabwärts der Turbine ist eine Entnahmestelle angeordnet, die mit einer Rückführstelle in Verbindung steht. Die Rückführstelle ist stromaufwärts des Verdichters angeordnet. Zwischen den Verdichter und den Motor ist ein Ladeluftkühler geschaltet. Zwischen die Turbine und die Entnahmestelle ist ein Dieselpartikelfilter geschaltet.

Bei der Niederdruck-Abgasrückführung von Dieselmotoren wird ein Teil des Abgases nach dem Dieselpartikelfilter und einem Abgaskühler über den Ladeluftkühler in den Verbrennungsraum rückgeführt. Dabei wird das Abgas im Ladeluftkühler mit Ladeluft gemischt. Die Temperaturen im Ladeluftkühler liegen dabei häufig unter dem Taupunkt von Wasser und Schwefelsäure. Daher ist mit einer starken Bildung von schwefelsaurem Abgaskondensat zu rechnen. Bei einer nicht ausreichenden Korrosionsresistenz von Ladeluftkühler aus Aluminium kann es passieren, dass die Wanddicke der Turbulenzeinlage durch Korrosion stark reduziert wird. Dies kann zu einem mechanischen Versagen des Ladeluftkühlers durch Bersten einzelner Rohre führen.

Gemäß einem wesentlichen Aspekt der vorliegenden Erfindung wird die korrosiv hoch belastete Turbulenzeinlage aus Edelstahl, gebildet. Die Erfindung hat den Vorteil, dass zur Herstellung des Wärmeübertragers Standard-Aluminium-Lötverfahren angewendet werden können. Besonders bevorzugt wird eine Kombination eines herkömmlichen Aluminiumrohrs mit einer blanken oder einer plattierten oder beschichteten Turbulenzeinlage aus Edelstahl. Das liefert unter anderem den Vorteil, dass die Turbulenzeinlage weniger Korrosion unterliegt. Durch Oxidation beziehungsweise Korrosion des unedleren Metalls beziehungsweise der unedleren Phase oder Legierung werden die vorhandenen Wasserstoff-Ionen reduziert. Dadurch kann der pH-Wert des Abgaskondensats zu unkritischen, höheren Werten hin verschoben werden.

Im Rahmen der vorliegenden Erfindung haben sich Schutzplattierungen mit unedleren Elementen wie Zink oder Indium als vorteilhaft erwiesen. Dabei liegen die Silizium-Gehalte im Bereich von 4 bis 15 Prozent, bevorzugt von 5 bis 12 Prozent. Die Zink-Gehalte liegen im Bereich von 0,05 bis 10 Prozent, bevorzugt von 0,2 bis 5 Prozent. Die Indium-, Zinn- und Vanadium-Gehalte liegen bevorzugt jeweils unter 0,3 Prozent. Die Plattierschichtdicken liegen zwischen 2 und 30 Prozent, bevorzugt zwischen 5 und 20 Prozent, der zugehörigen Rohrdicke beziehungsweise Turbulenzeinlagendicke.

Im Rahmen der vorliegenden Erfindung haben sich Lotplattierungen mit unedleren Elementen wie Zink oder Indium als vorteilhaft erwiesen. Dabei liegen die Silizium-Gehalte im Bereich von 4 bis 15 Prozent, bevorzugt von 5 bis 12 Prozent. Die Zink-Gehalte liegen im Bereich von 0,05 bis 10 Prozent, bevorzugt von 0,2 bis 5 Prozent. Die Indium-, Zinn- und Vanadium-Gehalte liegen bevorzugt jeweils unter 0,3 Prozent. Die Plattierschichtdicken liegen zwischen 2 und 30 Prozent, bevorzugt zwischen 5 und 20 Prozent, der zugehörigen Rohrdicke beziehungsweise Turbulenzeinlagendicke. Zwischen dem Kemwerkstoff und der Lotplattierung, die zinkhaltig oder zinkfrei sein kann, kann auch eine zusätzliche Schutzplattierung vorgesehen sein.

Der ebenfalls mögliche Einsatz von zinkhaltigen Flussmitteln hat zur Folge, dass sich nach dem Löten im gelöteten Bereich des Wärmeübertragers eine zinkreiche Oberfläche einstellt, die auch als Diffusionszone bezeichnet wird.

Gemäß einem wesentlichen Aspekt der vorliegenden Erfindung wird auf die Turbulenzeinlage aus Edelstahl vor dem Löten eine dünne Aluminiumschicht aufgebracht, die auch als Schutzschicht bezeichnet wird. Das Aluminium in der Aluminiumschicht kann in Reinform oder in Form einer Legierung vorliegen. Die Aluminiumschicht wird mittels eines Dünnschichtverfahrens, zum Beispiel PVD (Physical Vapour Deposition), CVD (Chemical Vapour Deposition) oder Sputtern, aufgebracht. Die Aluminiumschicht kann auch galvanisch, vorzugsweise mit Hilfe von nichtwässrigen Badsystemen, appliziert werden. Auf die vor dem Löten aufgebrachte Aluminiumschicht können anschließend noch weitere Schichten mit Lot und/oder Flussmittel aufgebracht werden.

Durch die Vorbeschichtung ist es möglich, Leichtmetalle, wie zum Beispiel Aluminium, mit Edelstahl unter Schutzgas mit oder ohne Zuhilfenahme von Flussmitteln oder auch im Vakuumlötverfahren flussmittelfrei zu Löten.

In der beiliegenden Figur ist der Schichtaufbau schematisch dargestellt. Ein Wärmeübertragerrohr ist aus Aluminium 1 gebildet. Auf das Aluminium 1 des Wärmeübertragerrohrs ist eine Lotplattierung 2 aufgebracht. Die Lotplattierung 2 enthält zum Beispiel Aluminium und Silizium. Die Lotplattierung 2 dient dazu, das Aluminium 1 des Wärmeübertragerrohrs mit einer Aluminium-Dünnschicht 3 stoffschlüssig zu verbinden, die auf eine Turbulenzeinlage aus Edelstahl 4 aufgebracht ist.

Bei einer geeigneten. Wahl des Aluminiumwerkstoffes mit entsprechenden Getter-Zusätzen, zum Beispiel Magnesium, ist die vorliegende Erfindung auch zum Vakuumlöten von Edelstahl und Magnesium geeignet. Neben Aluminium können weitere Metalle, zum Beispiel Titan, für die Dünnschicht verwendet werden, die eine Benetzung der Edelstahloberfläche mit Aluminiumbasislot verbessern.

Die Erfindung ermöglicht es, Edelstahl mit Leichtmetallen, wie Aluminium, auf kostengünstige und serientaugliche Art und Weise zu fügen. Mit der Erfindung können auch große und komplexe Geometrien in Durchgangsöfen oder im Batch-Betrieb geführten Öfen mit gängigen Lötverfahren gefügt werden. Die Leichtmetalldünnschicht wird vorzugsweise bereits vor weiteren Umformschritten auf Edelstahlcoils aufgebracht. Durch den Verbund von Leichtmetall mit Edelstahl kann eine Gewichtsreduzierung mit gleichzeitiger Beibehaltung der hohen Korrosionsresistenz beziehungsweise Festigkeit des Edelstahls, auch bei höheren Temperaturen, erhalten werden. Durch die leichteren Wärmeübertrager kann der Kraftstoffverbrauch von Kraftfahrzeugen reduziert werden. Im Vergleich zum Laserschweißen sind die vorab genannten Lötverfahren günstiger und erlauben höhere Durchsatzzahlen.

## Patentansprüche

1. Abgaswärmeübertrager oder Ladeluftkühler mit mindestens einem aus einer Rohrlegierung gebildeten Rohr, das von einem Medium durchströmt wird und in dem eine aus einer Einlagenlegierung gebildete Turbulenzeinlage angeordnet ist, **dadurch gekennzeichnet, dass** die Rohrlegierung eine Leichtmetalllegierung (1), insbesondere Aluminium oder eine Aluminiumlegierung, ist und dass das Rohr mit der Turbulenzeinlage verlötet ist, wobei die Einlagenlegierung Edelstahl ist und das Rohr aus einem plattierten Rohrwerkstoff gebildet ist, wobei die Turbulenzeinlage vor dem Löten mit einer Schutzplattierung (3) aus Aluminium oder einer Aluminiumlegierung beschichtet und anschließend mit dem Rohr aus Leichtmetall (1) verlötet ist, wobei die Schicht aus Aluminium oder einer Aluminiumlegierung der Turbulenzeinlage mittels eines Dünnschichtverfahrens wie PVD, CVD oder Sputtern, oder galvanisch aufgebracht wird und die Turbulenzeinlage und/oder das Rohr vor dem Löten mit einer weiteren Beschichtung (2) versehen ist/sind.

2. Wärmeübertrager nach Anspruch 1, **dadurch gekennzeichnet, dass** die Schutzplattierung (3) 4 bis 15, insbesondere 5 bis 12, Prozent Silizium und/oder 0,05 bis 10, insbesondere 0,2 bis 5, Prozent Zink enthält.

3. Wärmeübertrager nach einem der Ansprüche 1 oder 2, **dadurch gekennzeichnet, dass** die Schutzplattierung (3) bis zu 0,3 Prozent Indium, Zinn und/oder Vanadium enthält.

4. Wärmeübertrager nach einem der Ansprüche 1 bis 3, **dadurch gekennzeichnet, dass** die Dicke der Schutzplattierung (3) 2 bis 30, insbesondere 5 bis 20, Prozent der Dicke der Turbulenzeinlage beträgt.

## Claims

1. An exhaust gas heat exchanger or charge-air cooler, comprising at least one tube, which is made of a tube alloy and through which a medium flows and in which a turbulence insert made of an insert alloy is disposed, **characterized in that** the tube alloy is a light metal alloy (1), in particular aluminum or an aluminum alloy, and that the tube is brazed to the turbulence insert, wherein the insert alloy is stainless steel and the tube is made of a plated tube material, wherein the turbulence insert, prior to brazing, is coated with a protective plating (3) made of aluminum or an aluminum alloy and is then brazed to the tube made of light metal (1), wherein the layer made of aluminum or an aluminum alloy of the turbulence insert is applied using a thin-film method such as PVD, CVD or sputtering, or is applied by way of electroplating, and the turbulence insert and/or the tube are provided with another coating (2) prior to brazing.

2. The heat exchanger according to claim 1, **characterized in that** the protective plating (3) includes 4 to 15, in particular 5 to 12, percent silicon and/or 0.05 to 10, in particular 0.2 to 5, percent zinc.

3. The heat exchanger according to either claim 1 or 2, **characterized in that** the protective plating (3) includes up to 0.3 percent indium, tin and/or vanadium.

4. A heat exchanger according to any one of claims 1 to 3, **characterized in that** the thickness of the protective plating (3) is 2 to 30, in particular 5 to 20, percent of the thickness of the turbulence insert.

## Revendications

1. Echangeur de chaleur de gaz d'échappement ou refroidisseur d'air de suralimentation comprenant au moins un tube formé par un alliage de tube, tube qui est traversé par un milieu et dans lequel est disposée une pièce intercalaire créant des turbulences et formée dans un alliage de la pièce intercalaire, **caractérisé en ce que** l'alliage du tube est un alliage de métaux légers (1), en particulier de l'aluminium ou un alliage d'aluminium, et **en ce que** le tube est brasé avec la pièce intercalaire créant des turbulences, où l'alliage de la pièce intercalaire est un acier spécial et le tube est formé par un matériau tubulaire plaqué, où la pièce intercalaire créant des turbulences est, avant le brasage, recouverte d'un placage de protection (3) se composant d'aluminium ou d'un alliage d'aluminium et, ensuite, est brasée avec le tube en métal léger (1), où la couche d'aluminium ou d'un alliage d'aluminium de la pièce intercalaire créant des turbulences est appliquée au moyen d'un procédé d'application en couches minces comme celui réalisé par déposition en phase gazeuse par procédé physique (PVD), par déposition en phase gazeuse par procédé chimique (CVD) ou bien réalisé par pulvérisation ou par application galvanique, et la pièce intercalaire créant des turbulences et/ou le tube est/sont doté(e)(s), avant le brasage, d'une autre couche de revêtement (2).

2. Echangeur de chaleur selon la revendication 1, **caractérisé en ce que** le placage de protection (3) contient de 4 % à 15 %, en particulier de 5 % à 12 % de silicium et/ou de 0,05 % à 10 %, en particulier de 0,2 % à 5 % de zinc.

3. Echangeur de chaleur selon l'une des revendications 1 ou 2, **caractérisé en ce que** le placage de protection (3) contient jusqu'à 0,3 % d'indium, d'étain et/ou de vanadium.

4. Echangeur de chaleur selon l'une quelconque des revendications 1 à 3, **caractérisé en ce que** l'épaisseur du placage de protection (3) est de 2 % à 30 %, en particulier de 5 % à 20 % par rapport à l'épaisseur de la pièce intercalaire créant des turbulences.
